# EUROPEAN PATENT SPECIFICATION

(11) **EP 0 993 983 B1**
(45) Date of publication and mention of the grant of the patent: **11.09.2002**
(21) Application number: 99830624.5
(22) Date of filing: 05.10.1999
(51) Int. Cl.: B60K 25/06

(54) **Power take-off adapter**
Adapter für Zapfwellenantrieb
Adaptateur pour prise de force

(30) Priority: 16.10.1998 IT MO980216
(43) Date of publication of application: 19.04.2000
(73) Proprietor: Interpump Hydraulics S.p.A., 41015 Nonantola (MO) (IT)
(72) Inventor: Prampolini, Silvano, 41030 Bomporto (Modena) (IT)
(74) Representative: Gotra, Stefano

(56) References cited:
- EP-A- 0 677 416
- GB-A- 2 153 763

## Description

The invention especially relates to selective connection of two distinct types of user to a same power take-off.

Specifically, though not exclusively, the invention is usefully applied on users such as gear pumps having a standard three- or four-hole attachment. In the present case the invention can connect a user having a four-hole attachment with a power take-off predisposed for connecting up with a user having a three-hole attachment. A system according to the preamble of claim 1 is know in the prior art.

Normally the users (for example, pumps) provided with a standard three-hole attachment are relatively light and small, while standard four-hole attachments are heavier and more unwieldy. The prior art therefore comprises standard three-hole attachments destined to fix lighter and smaller users, and four-hole standard attachments for fixing heavier and larger users.

It is quite normal in practice, however, for it to be necessary to attach a user of one type with a power take-off of the other type.

To solve the above-mentioned problem there exists an adaptor which is interpositioned between the take-off and the user, comprising a main body having a central cylindrical hole, open at both ends, into one end of which the free end of the take-off shaft is inserted, while the other end receives the free end of the user shaft. Three attachment through-holes are bored into the main body, parallel to the axis of the cavity and angularly equidistanced with respect thereto. Each attachment hole exhibits one end which is disposed on a first attachment surface of the body, perpendicular to the axis of the cavity and destined to couple with the three-holed flange of the power take-off. The three through holes on the main body are arranged so as to be able to line up with the three attachment holes on the power take-off and thus enable a fixture to be achieved, for example using stud bolts, between the adaptor and the take-off.

The adaptor body exhibits, on the opposite side from the first attachment surface, a flange bearing a second attachment surface displaying four through-holes, arranged so that a corresponding four-hole flange of a second user can be attached thereto.

The known adaptor as described above further comprises a sleeve which can be inserted in the cavity of the main body and provided, at opposite ends thereof, with two female elements for grooved coupling with the free ends (exhibiting corresponding male elements) of the power take-off shaft and, respectively, the shaft of the second user.

One drawback of the above known adaptor is that when a user with a standard four-hole attachment is connected up to a power take-off with a standard three-hole attachment, the connection is rather weak as the screw-connecting organs, for example stud bolts, are three in number but have to support the weight of a user having a four-hole attachment. The situation is further exacerbated by the fact that the user is arranged more projectingly than it would be if the adaptor were not interpositioned, so that the moment of the mass is even greater. This leads to structural problems which considerably limit the use of relatively large users with four-hole attachments on power take-offs predisposed for use with three-hole attachments.

The main aim of the present invention is to obviate the drawbacks in the prior art mentioned above, by providing a series of elements through which it is possible to realise a highly-resistant mechanical connection enabling selective attachment of at least two users provided with non-homogeneous attachments to a same power take-off.

One advantage of the invention is that it provides a series of constructionally simple and economic elements.

A further advantage is that it enables the attachment to be mounted and dismounted relatively quickly and simply.

The technical characteristics of the present invention, in accordance with the above-mentioned aims and advantages, can be clearly understood from the content of the appended claims.

Further characteristics and advantages of the invention will better emerge from the detailed description that follows, made with reference to the enclosed figures of the drawings, which represent an embodiment of the invention, here represented in a non-limiting purely exemplary form, in which:

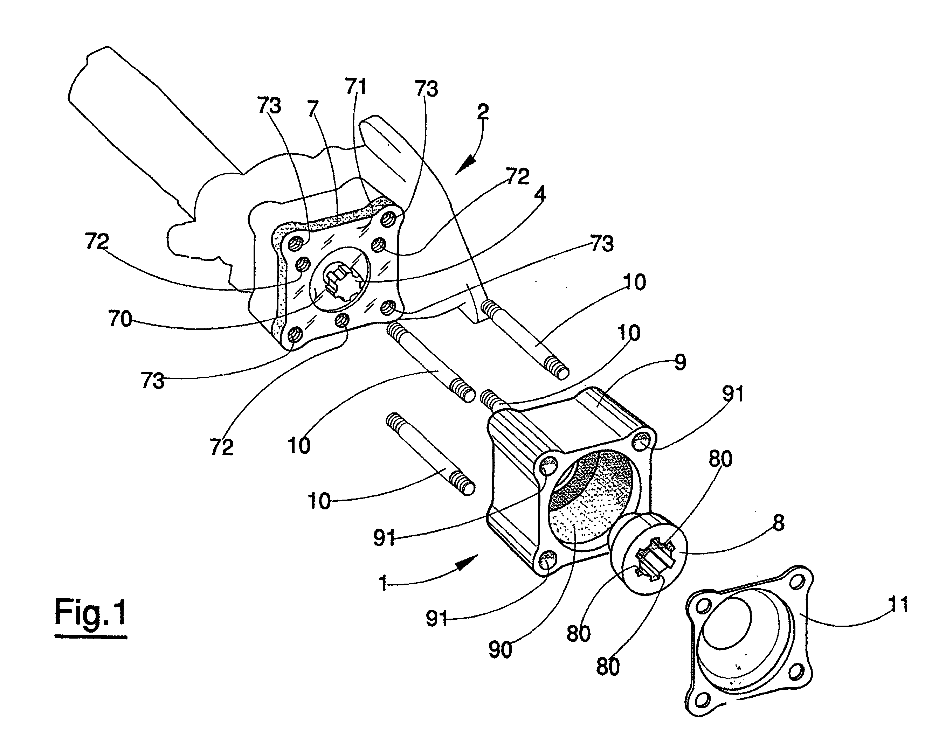

figure 1 is an exploded schematic view of a series of elements made in accordance with the invention;
figure 2 is a schematic longitudinal section, made according to vertical line II-II of following figure 3, of a connection between a power take-off and a first user;
figure 3 is a transversal section made according to vertical line III-III of figure 2;
figure 4 is a schematic longitudinal section made according to vertical line IV-IV of following figure 5, of a connection between the power take-off of figures 2 and 3 and a second user;
figure 5 is a transversal section made according to vertical line V-V of figure 4.

With reference to the figures of the drawings, 1 denotes in its entirety a series of elements which enable selective connection of at least two distinct types of user with one power take-off 2.

The power take-off 2 is provided with a shaft 3 able to transmit mechanical power, having a free end 4 destined to be selectively connected with a shaft of a first user or a second user, on an industrial vehicle for activating various types of user. The shaft 3 of the power take-off can be driven directly from the clutch shaft or the secondary shaft of the speed changer. The free end 4 of the shaft is longitudinally grooved to enable linking up with the control shaft, also grooved, of the user to be activated. In place of a grooved connection, other types of connection could be used. A double universal joint connection could also be used, or another drive transmission device.

In the case in point, the two users 5 and 6 are constituted by hydraulic pumps. It is however possible to connect other users up to the power take-off.

The first user 5 has a standard three-hole attachment comprising a first flanged element 50 which exhibits three attachment holes 51 arranged circumferentially about the axis of the first user shaft, and angularly equidistanced by 120°.

The second user 6 has a standard four-hole attachment comprising a second flanged element 60 which exhibits four attachment holes 61 arranged circumferentially about the axis of the second user shaft, and angularly equidistanced by 90°.

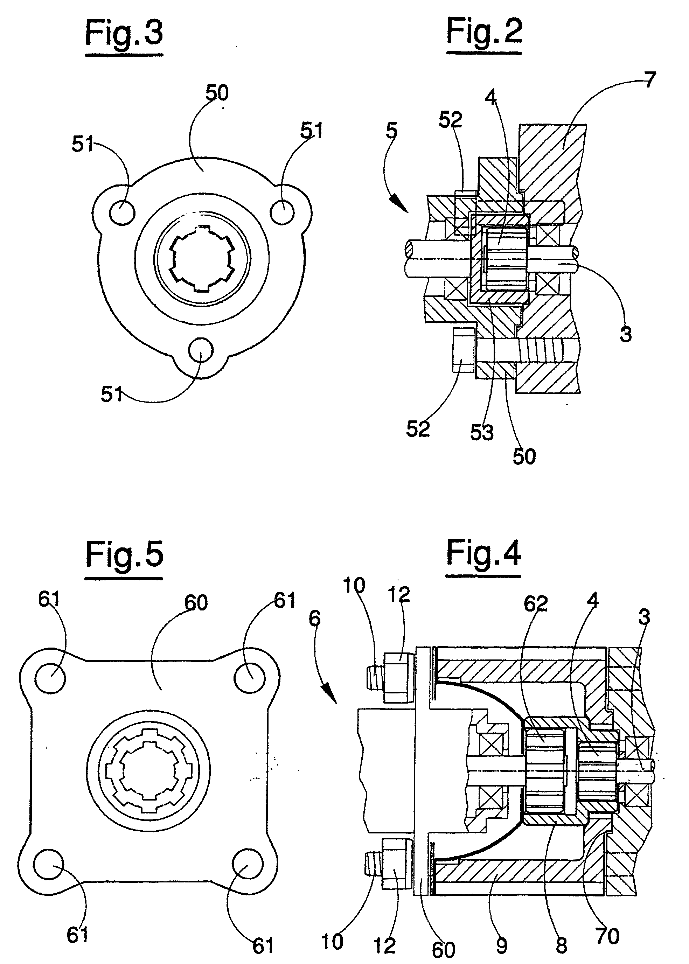

A comparison between figures 3 and 5 shows that the holes 61 on the second flanged element 60 have a reciprocal arrangement which differs from that of the attachment holes 51 of the first flanged element 50.

The system for enabling a selective connection of two different types of users to a power take-off comprises at least one support element 7, a joint element 8 and an adaptor 9.

The support element 7, solidly constrained to the power take-off 2, exhibits a central cavity 70 from which the grooved free end 4 of the power take-off shaft projects. The support element 7 exhibits a front attachment surface 71 on which a first group of attachment holes 72 are made. These holes 72 are threaded and angularly arranged about the axis of the power take-off shaft. The holes 72 of the first group are destined to couple, by means of threaded connection organs, with the attachment holes 51 predisposed on the first flanged element of the first user. In the illustrated embodiment, the first group of holes comprises three holes 72 arranged circumferentially about the axis of the power take-off shaft at a predetermined distance from said axis.

The front attachment suurface 71 of the support element 7 exhibits a second group of attachment holes 73, also threaded, angularly arranged equidistantly about the axis of the power take-off, having the same arrangement as the attachment holes 61 of the second flanged element of the second user. In this embodiment the second group of holes comprises four holes 73, arranged circumferentially about the axis of the power take-off shaft at a distance from the axis which is greater than the distance of the holes 72 of the first group from the same axis.

The adaptor 9, which is able to connect the second user 6 with the power take-off 2, is destined in use to be interpositioned and fixed between the support element 7 and the second flanged element 60. The adaptor 9 is provided at a centre thereof with a cylindrical through-passage 90, through which a mechanical connection is obtained between the free end 4 of the shaft of the power take-off and the free end 62 of the second user.

The adaptor 9 exhibits a plurality of through-holes 91 having axes which are reciprocally parallel, having a same number and arrangement as the attachment holes 61 of the second group. Thus, in this embodiment four through holes 91 are made in the adaptor 9. The adaptor 9 exhibits two end faces, parallel and opposite one another and perpendicular to the axis of the through-passage 90 and distanced according to the direction of the axis. The through-holes 91 of the adaptor 9 each exhibit an end arranged on one of the two faces and the opposite end arranged on the other of the two faces. The length of the adaptor 9, which coincides with the distance between the two end faces, is predetermined so as to enable a connecting-up of the ends 4 and 62 of the two shafts by means of the joint element 8.

The joint element 8, which is shaped like a sleeve, has an external diameter which is smaller than the diameter of the through-passage 90 afforded internally of the adaptor, so that it can be inserted into the adaptor through-passage 90. The joint element 8 is provided with a first end which is couplable to the free end 4 of the shaft of the power take-off and with a second end, opposite to the first end, which is couplable to the free end 62 of the shaft of the second user. In the illustrated embodiment the two ends of the joint element exhibit grooves 80 which slide-fit with the grooves of the ends 4 and 62 of the shafts.

The system further comprises a plurality of threaded connecting organs 10 each of which is destined to be inserted in a respective through-hole 91 in the adaptor 9. Each connecting organ 10 exhibits a first end which is couplable to a respective blind attachment hole 73 of the second group of holes and a second end, opposite to the first, which is couplable to a respective attachment hole 61 in the second flanged element. In this embodiment, the threaded connecting organs 10 are constituted by stud bolts each having a stem which can be screwed into the thread of corresponding blind hole 73 made in the support element 7 constrained to the power take-off. The stem is secured at one end by a nut for connection with a non-threaded through-hole 61 of the second flanged element constrained to the second user 6.

The system can comprise, as in the illustrated embodiment, a cover 11, comprising a flanged part affording four fixture holes and an intermediate cupola-shaped part holed in the centre, to enable passage of the grooved end of the user shaft.

During operation, in order to connect the power take-off to a user 5 of the first type, using a standard three-hole attachment the first flanged element 50 is coupled directly, by means of a screw-connection with screws 52, to the three threaded holes 72 on the base element. The user shaft exhibits a female grooved end 53 which is couplable with the male grooved end 4 of the power take-off. This type of connection, illustrated in figures 2 and 3, is realised in known ways.

To connect a user 6 of the second type, with a standard four-hole attachment, the series of elements 1 is used as illustrated in figures 4 and 5. A face of the adaptor 9 is brought into contact with the front surface 71 of the base element, aligning the non-threaded through-holes 91 of the adaptor with the threaded blind holes 73 on the base element, thus enabling a coupling of the stems of the stud bolts 10 in the threaded holes 73. The joint element 8, inserted in the through-passage 90 of the adaptor, is coupled at one end to the shaft of the power take-off 2 and at the other end to the user shaft 6. The through holes 61 on the flange of the user insert on the opposite ends of the stud bolts 10; the nuts 12 are then tightened down on the ends.

The second type of connection (figures 4 and 5) is especially sturdy and therefore suitable for heavier users, which are typically indeed those having standard four-hole attachments. In this connection, the user is supported by the support element of the power take-off at four points, sufficiently distanced one from another, according to what has been decided at the design stage.

## Claims

1. A system for enabling a selective connection of two different types of user (5, 6) to a power take-off, **comprising**:
a first user (5) which is provided with a first flanged element (50) which exhibits a plurality of attachment holes (51) arranged angularly about an axis of the shaft of the first user;
a second user (6) which is provided with a second flanged element (60) which exhibits a plurality of attachment holes (61) arranged angularly about an axis of the shaft of the second user; said attachment holes (61) being arranged differently to the attachment holes (51) of the first flanged element;
the power take-off which is provided with a shaft transmitting mechanical drive and having a free end (4) which is destined to selectively connect with a shaft of the first user (5) or the second user (6);
a support element (7), solidly constrained to the power take-off (2), provided with a central cavity (70) from which said free end (4) projects, and with a frontal attachment surface (71) which exhibits a first group of attachment holes (72) arranged angularly about the axis of the shaft of the power take-off, destined to be coupled by means of threaded coupling organs (52) with corresponding attachment holes (51) arranged on the first flanged element of the first user (5);
an adaptor (9) for connecting the second user (6) with the power take-off (2), destined to be interposed between and fixed to the support element (7) and the second flanged element (60), centrally exhibiting a through-passage (90) for enabling mechanical contact between the free end (4) of the shaft of the power take-off and a free end (62) of the shaft of the second user (6);
a joint element (8) shaped like a sleeve and having an external diameter which is inferior to a diameter of the internal through-passage (90) of the adaptor, and being destined to insert into the through-passage (90); also exhibiting a first end which is couplable with the free end (4) of the shaft of the power take-off and, opposite to the first end, also exhibiting a second end (62) which is couplable to the free end (62) of the shaft of the second user (6);
**characterised in that**:
the front attachment surface (71) of the support element exhibits a second group of attachment holes (73), arranged angularly equidistanced about the axis of the power take-off shaft, being arranged identically to the attachment holes (61) of the second flanged element of the second user (6);
the adaptor (9) is provided with a plurality of through-holes (91) having parallel axes, being arranged identically to the second group of attachment holes (73);
the system further comprises a plurality of threaded connecting organs (10), each of which is destined to be inserted into a respective through-hole (91) in the adaptor, exhibiting a first end which is couplable in a respective attachment hole (73) of the second group of holes and a second end, opposite to the first end, which is couplable in a respective attachment hole (61) of the second flanged element.

2. The system of claim 1, **characterised in that**: the adaptor (9) exhibits two end faces which are parallel and one opposite to another, which are both parallel to an axis of the through-passage (90) and distanced according to a direction of said axis; the through-holes (91) of the adaptor (9) exhibiting an end arranged on one of said faces and the opposite end arranged on the other of said faces.

3. The system of claim 1 or 2, **characterised in that** the second group of holes (73) comprises at least four holes arranged circumferentially about the axis of the shaft of the power take-off (2) at a distance from the axis which is greater than a distance of the holes (72) of the first group from the same axis.

4. The system of any one of the preceding claims, **characterised in that** the threaded connecting organs (10) are constituted by stud bolts.

## Patentansprüche

1. System zum wahlweisen Verbinden von zwei verschiedenen Benutzertypen (5, 6) mit einer Zapfwelle, enthaltend:
- einen ersten Benutzer (5), welcher mit einem ersten geflanschten Element (50) versehen ist, das eine Anzahl von Befestigungsbohrungen (51) aufweist, die winkelmässig um eine Achse der Welle des ersten Benutzers angeordnet sind;
- einen zweiten Benutzer (6), welcher mit einem zweiten geflanschten Element (60) versehen ist, das eine Anzahl von Befestigungsbohrungen (61) aufweist, die winkelmässig um eine Achse der Welle des zweiten Benutzers angeordnet sind, wobei diese eine andere Anordnung haben als die Befestigungsbohrungen (51) des ersten geflanschten Elementes;
- die Zapfwelle, welche mit einer Welle versehen ist, die den mechanischen Antrieb überträgt und ein freies Ende (4) hat, dazu bestimmt, sich wahlweise mit einer Welle des ersten Benutzers (5) oder des zweiten Benutzers (6) zu verbinden;
- ein Trägerelement (7), das fest mit der Zapfwelle (2) verbunden und mit einem mittleren Hohlraum (70) versehen ist, aus welchem das genannte freie Ende (4) herausragt, sowie mit einer frontalen Anschlussfläche (71), welche eine Gruppe von Befestigungsbohrungen (72) aufweist, winkelmässig angeordnet um die Zapfwellenachse und dazu bestimmt, mit Hilfe von mit Gewinde versehenen Verbindungselementen (52) mit den entsprechenden Befestigungsbohrungen (51) verbunden zu werden, die an dem ersten geflanschten Element des ersten Benutzers (5) angeordnet sind;
- einen Adapter (9) zum Verbinden des zweiten Benutzers (6) mit der Zapfwelle (2), dazu bestimmt, zwischen dem Trägerelement (7) und dem zweiten geflanschten Element (60) eingesetzt und an diesen befestigt zu werden, wobei er eine durchgehende Öffnung (90) aufweist, um die mechanische Verbindung zwischen dem freien Ende (4) der Zapfwelle und einem freien Ende (62) der Welle des zweiten Benutzers (6) zu erlauben;
- ein als Buchse ausgebildetes Verbindungselement (8) mit einem Aussendurchmesser, welcher geringer ist als der Durchmesser der internen durchgehenden Öffnung (90) des Adapters, und das dazu bestimmt ist, in die durchgehende Öffnung (90) eingeführt zu werden; wobei es auch ein erstes Ende aufweist, welches mit dem freien Ende (4) der Zapfwelle verbindbar ist, und wobei es entgegengesetzt zu dem ersten Ende auch ein zweites Ende aufweist, welches mit dem freien Ende (62) der Welle des zweiten Benutzers (6) verbindbar ist;
**dadurch gekennzeichnet, dass**
die frontale Anschlussfläche (71) des Trägerelementes (7) eine zweite Gruppe von Befestigungsbohrungen (73) aufweist, winkelmässig im gleichen Abstand voneinander um die Achse der Zapfwelle angeordnet, wobei sie die gleiche Anordnung haben wie die Befestigungsbohrungen (61) des zweiten geflanschten Elementes des zweiten Benutzers (6);
der Adapter (9) mit einer Anzahl von durchgehenden Bohrungen (91) mit parallelen Achsen zueinander versehen ist, angeordnet in der gleichen Weise wie die zweite Gruppe von Befestigungsbohrungen (73);
das System ausserdem eine Anzahl von mit Gewinde versehenen Verbindungselementen (10) enthält, von denen jedes dazu bestimmt ist, in eine entsprechende durchgehende Bohrung (91) in dem Adapter eingesetzt zu werden, wobei es ein erstes Ende aufweist, welches mit einer entsprechenden Befestigungsbohrung (73) der zweiten Gruppe von Bohrungen verbindbar ist, sowie ein zweites Ende, entgegengesetzt zu dem ersten Ende angeordnet, welches mit einer entsprechenden Befestigungsbohrung (61) des zweiten geflanschten Elementes verbindbar ist.

2. System nach Patentanspruch 1, **dadurch gekennzeichnet, dass** der genannte Adapter (9) zwei Endflächen aufweist, welche parallel und entgegengesetzt zueinander angeordnet sind und beide parallel zu einer Achse der durchgehenden Öffnung (90) verlaufen, und zwar in einem Abstand voneinander in einer Richtung der genannten Achse; wobei die durchgehenden Bohrungen (91) des Adapters (9) ein Ende an der einen der genannten Flächen und das entgegengesetzte Ende an der anderen der Genannten Flächen angeordnet aufweisen.

3. System nach Patentanspruch 1 oder 2, **dadurch gekennzeichnet, dass** die zweite Gruppe von Bohrungen (73) wenigstens vier Bohrungen enthält, die umlaufend um die Achse der Zapfwelle (2) angeordnet sind, und zwar mit einem Abstand von der Achse, der grösser ist als der Abstand der Bohrungen (72) der ersten Gruppe von derselben Achse.

4. System nach einem beliebigen der vorstehenden Patentansprüche, **dadurch gekennzeichnet, dass** die mit Gewinde versehenen Verbindungselemente (10) aus Stiftbolzen bestehen.

## Revendications

1. Un système pour permettre la connexion de deux différents types d'utilisateurs (5, 6) à une prise de force, comprenant:
- un premier utilisateur (5) pourvu d'un premier élément en forme de flange (50) présentant une pluralité d'orifices de fixation (51) disposés angulairement autour de l'axe de l'arbre du premier utilisateur;
- un second utilisateur (6) pourvu d'un second élément en forme de flange (60) présentant une pluralité d'orifices de fixation (61) disposés angulairement autour de l'axe de l'arbre du premier utilisateur; lesdits orifices de fixation (61) étant disposés différemment des orifices de fixation (51) du premier élément en forme de flange;
- la prise de force pourvue d'un arbre transmettant un actionnement mécanique et ayant une extrémité libre (4) destinée à une connexion sélective à un arbre du premier utilisateur (5) ou du second utilisateur (6);
- un élément de support (7), solidaire de la prise de force (2), pourvu d'une cavité centrale (70) de laquelle est saillante ladite extrémité libre (4), et d'une surface frontale de fixation (71) qui présente un premier groupe d'orifices de fixation (72) disposés angulairement autour de l'axe de l'arbre de la prise de force, destinés à l'accouplement au moyen d'organes d'accouplement filetés (52) avec les orifices de fixation (51) correspondants sur le premier élément en forme de flange du premier utilisateur (5);
- un adaptateur (9) pour connecter le second utilisateur (6) à la prise de force (2), destiné à être interposé entre l'élément de support (7) et le second élément en forme de flange (60) et fixé à ces derniers, présentant en son centre une cavité passante (90) pour permettre le contact mécanique entre l'extrémité libre (4) de l'arbre de la prise de force et une extrémité libre (62) de l'arbre du second utilisateur (6);
- un élément de jointure (8) en forme de douille ayant un diamètre externe inférieur à un diamètre de la cavité passante interne (90) de l'adapteur, et étant destiné à être inséré dans la cavité passante (90); présentant également une première extrémité pouvant être accouplée avec l'extrémité libre (4) de l'arbre de la prise de force et, opposé à la première extrémité, présentant également une seconde extrémité (62) pouvant être accouplée à l'extrémité libre (62) de l'arbre du second utilisateur (6);
**caractérisé en ce que**:
- la surface frontale de fixation (71) de l'élément de support présente un second groupe d'orifices de fixation (73), disposés angulairement de manière équidistante autour de l'axe de l'arbre de la prise de force, et disposés de la même manière que les orifices de fixation (61) du second élément en forme de flange du second utilisateur (6);
- l'adaptateur (9) est pourvu d'une pluralité d'orifices passants (91) ayant des axes parallèles, disposés de la même manière que le second groupe d'orifices de fixation (73);
- le système comprend de plus une pluralité d'organes de connexion filetés (10), chacun desquels étant destiné à être inséré dans un respectif orifice passant (91) dans l'adaptateur, présentant une première extrémité pouvant être accouplée à un respectif orifice de fixation (73) du second groupe d'oririfices et une seconde extrémité, opposée à la première, pouvant être accouplée à un respectif orifice de fixation (61) du second élément en forme de flange.

2. Le système selon la revendication 1, **caractérisé en ce que**: l'adapteur (9) présente des faces d'extrémité parallèles et opposées entre elles, toutes deux parallèles à un axe de la cavité passante (90) et distancées selon la direction dudit axe; les orifices passants (91) de l'adaptateur (9) présentent une extrémité disposée sur l'une desdites faces et l'extrémité opposée disposée sur l'autre face.

3. Le système selon la revendication 1 ou 2, **caractérisé en ce que** le second groupe d'orifices (73) comprend au moins quatre orifices disposés de manière circonférentielle autour de l'axe de l'arbre de la prise de force (2) à une distance de l'axe supérieure à une distance des orifices (72) du premier groupe par rapport au même axe.

4. Le système selon n'importe laquelle des revendications précédentes, **caractérisé en ce que** les organes de connexion filetés (10) sont constitués de goujons.
